# EUROPÄISCHE PATENTSCHRIFT

(11) **EP 2 584 567 B1**
(45) Veröffentlichungstag und Bekanntmachung des Hinweises auf die Patenterteilung: **10.02.2016**
(21) Anmeldenummer: 11290486.7
(22) Anmeldetag: 20.10.2011
(51) Int. Cl.: H01B 3/30, H01B 3/42, H01B 3/44, H01B 7/02, H01B 7/28, H01B 13/14, C08K 3/26, C08K 5/09, C08L 75/02, C08L 75/04, H01B 7/38, C08G 101/00, H01B 3/28

(54) **LEICHT ABZUMANTELNDES ELEKTRISCHES KABEL**
EASILY STRIPPED ELECTRIC CABLE
CÂBLE ÉLECTRIQUE À DÉMONTAGE FACILE

(43) Veröffentlichungstag der Anmeldung: 24.04.2013
(73) Patentinhaber: Nexans, 75008 Paris (FR)
(72) Erfinder: Gemmel, Alfred, 90562 Kalchreuth (DE); Mehl, Alfred, 91166 Georgensmünd (DE); Lankes, Christian, 90537 Feucht (DE)
(74) Vertreter: Gauer, Pierre

(56) Entgegenhaltungen:
- EP-A2- 1 176 613
- EP-A2- 1 327 994
- WO-A1-02/082470
- WO-A1-2011/073325
- WO-A2-2011/054457
- DE-A1- 2 025 026
- DE-A1- 2 948 651
- DE-A1- 2 948 718
- DE-A1- 4 340 425
- DE-A1- 10 063 926
- GB-A- 1 313 022
- US-A1- 2008 283 272

## Beschreibung

Die vorliegende Erfindung betrifft elektrische Kabel, die zumindest zwei Adern, einen diese umfassenden Innenmantel und einen auf dem Innenmantel aufliegenden Außenmantel aufweisen oder daraus bestehen, sowie ein Herstellungsverfahren für das erfindungsgemäße Kabel. Das erfindungsgemäße elektrische Kabel weist einen Innen- und einen Außenmantel auf, die für das abschnittsweise Abmanteln leicht von den Adern zu entfernen sind.

Insbesondere betrifft die Erfindung Kabel, bei denen der Außenmantel unmittelbar auf dem Innenmantel aufliegt, ohne mit dem Innenmantel stoffschlüssig verbunden zu sein, oder bei denen der Außenmantel eine feste Verbindung mit dem Innenmantel eingeht, vorzugsweise eine Klebverbindung oder stoffschlüssige Verbindung.

Für die Konfektionierung von Kabeln, beispielsweise das Anschließen von Kontaktelementen an die elektrischen Leiter, die mit einer Isolierung die Adern bilden, ist es erforderlich, die Schichten in einem Endabschnitt des Kabels vollständig zu entfernen, die die Adern umgeben. Bislang ist es erforderlich, den Innen- und Außenmantel vollständig radial zu durchtrennen, um einen angrenzenden Abschnitt von den Adern entfernen zu können.

Bei dem erfindungsgemäßen Kabel besteht der Innenmantel und der Außenmantel aus jeweils einer Polymermischung, deren Polymerbestandteil aus einem thermoplastischen Elastomer besteht. Das thermoplastische Elastomer ist insbesondere thermoplastisches Polyurethan (TPU), das z.B. ein Blockcopolymer ist, bei dem sich Weichsegmente aus Polyol mit Diisocyanat mit Hartsegmenten aus Diisocyanat mit einem kurzkettigen Diol abwechseln. Bevorzugte thermoplastische Polyurethanpolymere sind unter der Bezeichnung Ellastolan von der Firma BASF erhältlich.

### Stand der Technik

Es ist bekannt, Kabel mit zumindest zwei Adern und einem diese umschließenden Mantel aus Polyurethan herzustellen.

Die EP 1 176 613 A2 beschreibt ein Kabel mit elektrischen Adern, die von einem Innenmantel umgeben sind, welcher aus 50% Polyetherurethan als Basismaterial, 20% Polyolefin und 29% Kalziumkarbonat als Zusatzstoffe sowie 1% eines Treibmittels besteht und auf welchem einen Außenmantel bildende äußere Schicht aufliegt. Der Außenmantel kann aus dem gleichen Basismaterial wie das der geschäumten Mischung des Innenmantels bestehen.

### Aufgabe der Erfindung

Der Erfindung stellt sich die Aufgabe, ein Kabel und ein Verfahren zu dessen Herstellung bereitzustellen, das einfacher zu konfektionieren ist, insbesondere dadurch, dass der Mantel von den Adern entfernt werden kann, wenn der Mantel nur unvollständig radial durchtrennt ist.

### Allgemeine Beschreibung der Erfindung

Die Erfindung löst die Aufgabe mit den Merkmalen der Ansprüche und insbesondere mit einem Kabel mit zumindest zwei Adern, die jeweils von einer Isolierung umgebene Leiter aufweisen, wobei die Adern von einem geschäumten Innenmantel aus einer Gasblasen enthaltenden ersten Polymermischung, deren Polymerkomponente aus thermoplastischem Elastomer besteht, und einem ungeschäumten Aussenmantel aus einer zweiten Polymermischung, welcher auf dem Innenmantel aufliegt, wobei die zweite Polymermischen frei von Gaseinschlüssen ist und deren Polymerkomponente aus demselben thermoplastischen Elastomer wie die der ersten Polymermischung besteht, umfaßt sind. Das thermoplastische Elastomer ist aus der Gruppe ausgewählt, die aus thermoplastischem Polyurethan, thermoplastischem Polyester-polyetherpolymer, thermoplastischem Polystyrolelastomer, thermoplastischem Polyolefinelastomer, Polystyrol-blockcopolymer und Mischungen dieser besteht. Erfindungsgemäß ist der Innenmantel geschäumt, vorzugsweise mit einem Porenanteil von 5 bis 70 Vol.-%, bevorzugt von 15 bis 40 Vol.-%, bevorzugter mit einem Porenanteil von 20 bis 30 Vol.-%, während der Außenmantel aus der zweiten Polymermischung besteht, und massiv ist bzw. keinen Porenanteil aufweist. Der Innenmantel kann direkt auf den Adern aufliegen, alternativ können Zwischenschichten zwischen den Adern und dem Innenmantel angeordnet sein.

Generell werden erfindungsgemäße Kabel durch Umspritzen von zumindest zwei Adern mit einer ersten Polymermischung und gleichzeitig oder unmittelbar anschließendes Umspritzen mit einer zweiten Polymermischung hergestellt, wobei anschließend die beiden um die Adern umspritzten Polymermischungen ausgehärtet werden, insbesondere durch Kühlen.

Beim Herstellungsverfahren für das erfindungsgemäße Kabel werden mindestens zwei Adern, die vorzugsweise miteinander verseilt sind, mit einer ersten Polymermischung und die erste Polymermischung mit einer zweiten Polymermischung umspritzt mit anschließendem Aushärten der ersten und zweiten Polymermischung. Der Polymerbestandteil der ersten Polymermischung, die den Innenmantel bilden wird, ist thermoplastisches Elastomer, und die erste Polymermischung enthält ein Schäumungsmittel. Der Polymerbestandteil der zweiten Polymermischung, die den Außenmantel bilden wird, ist dasselbe thermoplastische Elastomer wie das der ersten Polymermischung. Das thermoplastische Elastomer ist aus der Gruppe ausgewählt, die aus thermoplastischem Polyurethan, thermoplastischem Polyester-polyetherpolymer, thermoplastischem Polystyrolelastomer, thermoplastischem Polyolefinelastomer, Polystyrol-blockcopolymer und Mischungen dieser besteht. Im Anschluss an die Umspritzung der Adern mit der ersten Polymermischung und der zweiten Polymermischung wird das Kabel gekühlt, so dass ein ausgehärteter geschäumter Innenmantel aus der ersten Polymermischung mit einem darauf aufliegenden, insbesondere verbundenen, ausgehärteten Außenmantel aus der zweiten Polymermischung erzeugt wird. Der Außenmantel kann formschlüssig ohne Stoffschluss, bevorzugt stoffschlüssig auf dem geschäumten Innenmantel aufliegen.

Es hat sich gezeigt, dass insbesondere die bevorzugte Co-extrusion der ersten und der zweiten Polymermischung um die Adern bei der anschließenden gemeinsamen Härtung der beiden Polymermischungen einen sehr festen Verbund, insbesondere einen stoffschlüssigen Verbund der ersten Polymermischung mit der zweiten Polymermischung erzeugt, so dass am erfindungsgemäßen Kabel die den Innenmantel bildende erste Polymermischung stoffschlüssig mit der darauf aufliegenden zweiten Polymermischung verbunden ist, die den Außenmantel des Kabels bildet. Dadurch, dass der Innenmantel aus einer aufgeschäumten ersten Polymermischung auf Basis eines thermoplastischen Elastomers besteht, ergibt sich im Vergleich zu ungeschäumten Innenmänteln eine Gewichtsreduktion für das erfindungsgemäße Kabel bei gleichzeitig hoher Elastizität, die auf den Porenanteil des Innenmantels zurückgeht.

Das mit dem erfindungsgemäßen Verfahren hergestellte erfindungsgemäße Kabel hat den besonderen Vorteil, dass es zum Entfernen des Mantels von den Adern ausreicht, eine radiale Trennung durch den Mantel unvollständig vorzunehmen, beispielsweise durch teilweises radiales Einschneiden des Mantels bis in, vorzugsweise bis maximal in den Bereich der Grenzschicht zwischen Innen- und Außenmantel mit dem Schritt des anschließenden Entfernens eines Mantelabschnitts durch Bewegen des Mantelabschnitts parallel zur Längsachse des Kabels. Für die Entfernung eines Abschnitts des Mantels vom erfindungsgemäßen Kabel reicht es aus, dass der Außenmantel vollständig radial durchtrennt wird und der Innenmantel bestehen bleibt, da der Innenmantel bei Zugbelastung das Außenmantels in Längsrichtung der Längsachse des Kabels reißt und mit dem Außenmantel entfernt wird. So kann von dem Mantel aus Innen- und Außenmantel allein der Anteil des Außenmantel in seiner Querschnittsfläche senkrecht zur Längsachse des Kabels getrennt werden, so dass bei Zugbelastung des Kabelmantels in Längsrichtung der Längsachse des Kabels ein Entfernen des Mantelabschnitts bis zu der nur teilweisen Trennung des Mantelquerschnitts möglich ist. Dies ist insbesondere in Ausführungsformen vorteilhaft, bei denen der Außenmantel eine dünne Schicht auf dem Innenmantel ist, z.B. mit einer Schichtdicke von ca. 0,05 bis 20mm, bevorzugt 0,2 bis 1,5mm. Vorzugsweise wird in dem Bereich des Kabels, von dem der Mantelabschnitt entfernt wurde, ein Anschlussteil angebracht, z.B. ein Stecker, optional nach Entfernen der Aderisolierung.

Die Adern des Kabels können herkömmliche Isolierungen aufweisen, z.B. aus einer Kunststoffmischung auf Basis von PVC. Vorzugsweise sind die Adern mit einem Trennmittel beschichtet.

Generell kann das Kabel zumindest 2 Adern, einen um diese angeordneten Innenmantel und einen den Innenmantel umfassenden Außenmantel, optional eine zwischen Adern und Innenmantel angeordnete Folie und/oder Bandierung und/oder einen metallischen Schirm, insbesondere ein Metallgeflecht, aufweisen oder daraus bestehen. Erfindungsgemäß bevorzugt besteht der Mantel aus dem Innenmantel aus geschäumter erster Polymermischung und dem darauf aufliegenden Außenmantel aus zweiter ungeschäumten Polymermischung, wobei dieser Außenmantel eine homogene bzw. massive Schicht auf dem geschäumten Innenmantel bildet.

### Genaue Beschreibung der Erfindung

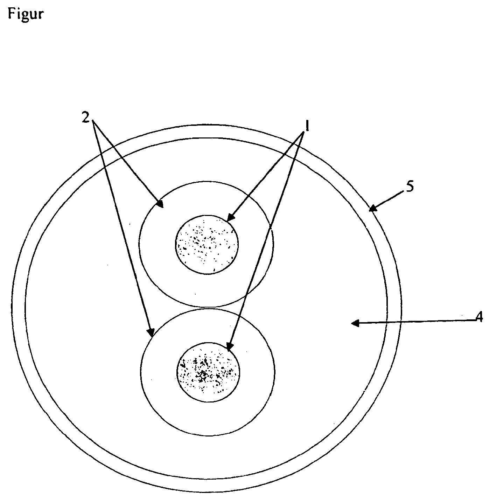

Die Erfindung wird nun genauer anhand von Beispielen und mit Bezug auf die Figur beschrieben, die schematisch den Aufbau des erfindungsgemäßen Kabels im Querschnitt zeigt.

Generell bevorzugt hat das Kabel insgesamt einen zylindrischen Außenumfang bzw. einen kreisförmigen Querschnitt, wie dies einem herkömmlichen Rundkabel entspricht, wobei weiter bevorzugt der Außenmantel eine im Wesentlichen einheitliche Schichtdicke aufweist. In weiterer bevorzugter Ausführungsform ist der Außenmantel in geringer Schichtdicke auf dem Innenmantel angeordnet, so dass der Außenmantel beispielsweise eine Schichtdicke von 0,05 bis 20mm, bevorzugter 0,2 bis 10mm, bevorzugter 0,3 bis 1,5mm oder 0,8 bis 1,0mm Schichtdicke aufweist.

Der erfindungsgemäße Aufbau des Kabels ist schematisch in der Figur anhand eines zweiadrigen Kabels gezeigt. Die Adern 1 bestehen jeweils aus einem Leiter 2, der insbesondere ein Litzenleiter ist, der von einer Isolierung 3 umfasst ist. Die Adern 1 sind miteinander verseilt und von einem aufliegenden Innenmantel 4 umgeben, der vorzugsweise einen kreisförmigen Außenumfang aufweist. Der Innenmantel 4 besteht aus einer Gasblasen enthaltenden ersten Polymermischung, deren Polymerkomponente aus thermoplastischem Elastomer besteht. Auf dem Innenmantel 4 aufliegend ist ein

Außenmantel 5 mit konstanter Schichtdicke aufgebracht, der daher einen kreisringförmigen Querschnitt aufweist. Der Außenmantel 5 besteht aus einer zweiten Polymermischung, deren Polymerkomponente aus thermoplastischem Elastomer besteht, wobei der Außenmantel 5 frei von Gaseinschlüssen ist.

Das thermoplastische Elastomer ist thermoplastisches Polyurethan, thermoplastisches Polyester-polyetherelastomer, thermoplastisches Polystyrolelastomer, thermoplastisches Polyolefinelastomer, ein Polystyrol-blockcopolymer oder eine Mischung eines thermoplastischen Elastomers. Generell bevorzugt ist das Polystyrol-blockcopolymer eines von Poly(Styrol-ethylen-butylenstyrol) (SEBS), Poly(Styrol-butadien-styrol) (SBS), Poly(Styrol-isopren-styrol) (SIS), Poly(Styrol-ethylen-propylen-styrol) (SEPS), Poly(Styrol-isobutylen-styrol) (SIS) und Mischungen dieser.

Das thermoplastische Elastomere kann bestehen aus zumindest einem Elastomer beinhaltenden thermoplastischen Polyolefin und/oder zumindest ein vernetztes Elastomer beinhaltendem thermoplastischen Polyolefin. Das Polyolefin, das in Mischung mit einem thermoplastischen Polymer vorliegt, kann ein kristallines Homopolymer oder ein kristallines statistisches Copolymer sein, insbesondere aus Propylen- und Ethyleneinheiten und/oder mit C4- bis C10- α-Olefineinheiten, insbesondere mit 1-Buten-, 1-Hexen-, 4-Methyl-1-penteneinheiten. Die α-Olefineinheiten können ungesättigt oder gesättigt sein. Das elastomere Polyolefin kann z.B. ein Ethylen-Propylen-Gummi (EPR) sein, optional mit Dien-Modifikation (EPDM).

Bevorzugt ist das thermoplastische Polymer thermoplastisches Polyurethan (TPU), z.B. thermoplastisches Polyetherurethan (Polyether-TPU) und/oder thermoplastisches Polyesterurethan (Polyester-TPU).

Optional besteht das thermoplastische Polymer aus einem Copolyester-Elastomer, einem Polyolefin-Elastomer oder Mischungen dieser.

Thermoplastische Polyesterpolymere als thermoplastisches Polymer umfassen solche mit Polyester- und Polyethersegmente und weisen z.B. Hartsegmente aus Polybutylenterephthalat (PBT) und Weichsegmente aus Polytetramethylenglycol (PTMG) auf, Hartsegmente aus Polybutylenterephthalat (PBT) und Weichsegmente aus Polycaprolacton (PCL), oder Hartsegmente aus Polybutylenterephthalat (PBT) und Weichsegmente aus Dimerfettsäuren. Alle genannten thermoplastische Elastomere werden in reiner Form als Polymer eingesetzt.

Eine bevorzugte erste Polymermischung, die nach Aushärtung den Innenmantel bildet, besteht aus den folgenden Bestandteilen:
- thermoplastisches Elastome, z.B. zu 80 -100 Gew.-Teilen, bevorzugt Polyurethan,
- Schäumungsmittel, z.B. eingetragener gasförmiger Stickstoff oder CO2 bevorzugt zumindest ein chemisches Schäumungsmittel, das beim Zersetzen Gas erzeugt, z.B. aus der Gruppe, die Carbonate, Bicarbonate" Hydrogencarbonate, Carbamate der Alkalimetalle oder der Erdalkalimetalle oder des Aluminiums, der Übergangsmetalle, oder von Ammonium mit einem Säureträger, z.B. eine Carbonsäure in Mischung mit Na-bicarbonat (erhältlich als Hydrocerol BM 70 von Clariant) oder Citronensäure (als Hydrocerol A erhältlich von Clariant) umfasst oder daraus besteht.

Die zweite Polymermischung, die nach Aushärtung den Außenmantel bildet, weist dieselbe Zusammensetzung auf, wie sie für die erste Polymermischung angeben ist, jedoch ohne Schäumungsmittel.

### Beispiel 1: Herstellung eines Kabels

In einer herkömmlichen Extrusionsmaschine, bei der ein erster Extruder die erste Polymermischung und ein zweiter Extruder die zweite Polymermischung einer Extruderdüse zuführen, die um einen Zentralkanal, in dem die Adern geführt werden, eine erste ringförmige Auslassöffnung für die erste Polymermischung und eine diese umfassende zweite ringförmige Auslassöffnung für die zweite Polymermischung aufwies, wurden zwei miteinander verseilte Adern umspritzt. Im Anschluss an das im Wesentlichen gleichzeitige Umspritzen der verseilten Adern mit erster und zweiter Polymermischung wurden diese Polymermischungen durch Kühlen ausgehärtet.

Für die erste Polymermischung wurde Hydrocerol BM 70, alternativ Hydrocerol A als Schäumungsmittel eingesetzt. Polymermischung des Innenmantels: TPU (Elastollan) plus 1 Gew.-% Hydrocerol BM 70.

Die zweite Polymermischung hatte für jedes Kabel die dieselbe Zusammensetzung wie die erste Polymermischung, allerdings ohne das Schäumungsmittel Hydrocerol.

Der Kopf des Extruders war auf ca. 200 °C temperiert. Es zeigte sich, dass durch die Verarbeitungstemperatur bei der Extrusion ein Aufschäumen der ersten Polymermischung erfolgte, und die Aushärtung der ersten und zweiten Polymermischung im Anschluss an ihre Extrusion ein Kabel mit einem mechanisch stabilen Mantel erzeugte.

Das erzeugte Kabel wies einen geschäumten Innenmantel mit ca. 20 bis 30 Vol.-% Gasblasen auf und einen auf dem Innenmantel aufliegenden massiven Außenmantel mit glatter Oberfläche. Der Querschnitt des Außenmantels war ringförmig; der Innenmantel füllte die Zwickel zwischen den Adern bis an den kreisförmigen Innenquerschnitt des Außenmantel aus.

### Beispiel 2: Abmanteln des Kabels

Für das Entfernen eines Abschnitts des Mantels wurde ein nach Bespiel 1 hergestelltes Kabel in einem Abstand von z.B. 1 bis 2 cm von einem Ende radial eingeschnitten, dass der Außenmantel umlaufend bis angrenzend an den Innenmantel durchtrennt war.

Bei diesen Versuchen hat sich gezeigt, dass es für das Abmanteln ausreicht, den Mantel bis durch die Schichtdicke des Außenmantel radial umlaufend zu durchtrennen, insbesondere bis an die Grenzschicht zum Innenmantel, um den Mantel einschließlich des Innenmantel in axialer Richtung von den Adern abziehen zu können.

Dieses Beispiel zeigt, dass das erfindungsgemäße Kabel den besonderen Vorteil bietet, dass für das Abmanteln nur der Außenmantel radial umlaufend zu durchtrennen ist, um einen endständigen Abschnitt des Mantels aus Außen- und Innenmantel axial von den Adern abzuziehen. Damit entfällt das vollständige radiale Durchtrennen von Außen- und Innenmantel, d.h. bis an die Adern, das beim Abmanteln von Kabeln erforderlich ist, die einen massiven, d.h. nicht geschäumten Innenmantel und einen Außenmantel aus Polymermischungen auf Basis von Polyurethan aufweisen.

### Bezugszeichenliste:

- 1: Ader
- 2: Leiter
- 3: Isolierung
- 4: Innenmantel
- 5: Außenmantel

## Patentansprüche

1. Kabel mit zumindest zwei Adern (1), die jeweils von einer Isolierung umgebene Leiter aufweisen, wobei die Adern (1) von
einem geschäumten Innenmantel (4) aus einer Gasblasen enthaltenden ersten Polymermischung, deren Polymerkomponente aus thermoplastischem Elastomer besteht und
einem ungeschäumten Aussenmantel (5) aus einer zweiten Polymermischung, welcher auf dem Innenmantel (4) aufliegt, wobei die zweite Polymermischen frei von Gaseinschlüssen ist und deren Polymerkomponente aus demselben thermoplastischen Elastomer wie die der ersten Polymermischung besteht,
umfasst sind,
wobei das thermoplastische Elastomer aus der Gruppe ausgewählt ist, die aus thermoplastischem Polyurethan, thermoplastischem Polyester-polyetherpolymer, thermoplastischem Polystyrolelastomer, thermoplastischem Polyolefinelastomer, Polystyrol-blockcopolymer und Mischungen dieser besteht.

2. Kabel nach Anspruch 1, **dadurch gekennzeichnet, dass** die erste Polymermischung des Innenmantel (4) einen auf einen Porenanteil von 5 bis 70 Vol. % geschäumt ist.

3. Kabel nach Anspruch 1 oder 2, **dadurch gekennzeichnet, dass** das Polystyrol-blockcopolymer eines von Poly(Styrol-ethylen-butylen-styrol) (SEBS), Poly(Styrolbutadien-styrol) (SBS), Poly(Styrol-isopren-styrol) (SIS), Poly(Styrol-ethylen-propylen-styrol) (SEPS), Poly(Styrol-isobutylen-styrol) (SIS) und Mischungen dieser ist.

4. Kabel nach einem der voranstehenden Ansprüche, **dadurch gekennzeichnet, dass** der Innenmantel (4) unmittelbar auf den Adern (1) aufliegt.

5. Kabel nach einem der Ansprüche 1 bis 3, **dadurch gekennzeichnet, dass** zwischen den Adern (1) und dem Innenmantel (4) eine Folie, eine Bandierung und/oder ein metallischer Schirm angeordnet ist.

6. Kabel nach einem der voranstehenden Ansprüche, **dadurch gekennzeichnet, dass** das thermoplastische Elastomer ein thermoplastisches Polyurethan (TPU) ist.

7. Kabel nach Anspruch 6, **dadurch gekennzeichnet, dass** das thermoplastische Polyurethan (TPU) ein thermoplastisches Polyetherurethan (Polyether-TPU) und/oder thermoplastisches Polyesterurethan (Polyester-TPU) ist.

8. Verfahren zur Herstellung eines Kabels nach den Ansprüchen 1-7 durch Umspritzen von zumindest zwei Adern (1) mit einer ersten Polymermischung und Umspritzen der ersten Polymermischung mit einer zweiten Polymermischung mit anschliessendem Aushärten der ersten und zweiten Polymermischung, **dadurch gekennzeichnet, dass** der Polymerbestandteil der ersten Polymermischung, die den Innenmantel bilden wird, thermoplastisches Elastomer ist und dass die erste Polymermischung ein Schäumungsmittel enthält, der Polymerbestandteil der zweiten Polymermischung, die den Außenmantel bilden wird, dasselbe thermoplastische Elastomer wie das der ersten Polymermischung ist,
wobei das thermoplastische Elastomer aus der Gruppe ausgewählt ist, die aus thermoplastischem Polyurethan, thermoplastischem Polyester-polyetherpolymer, thermoplastischem Polystyrolelastomer, thermoplastischem Polyolefinelastomer, Polystyrol-blockcopolymer und Mischungen dieser besteht.

9. Verfahren nach Anspruch 8, **dadurch gekennzeichnet, dass** das Umspritzen mittels eines Extruders erfolgt, der temperiert ist, dass die erste Polymermischung auf die Zersetzungstemperatur des Schäumungsmittels temperiert wird.

10. Verfahren nach einem der Ansprüche 8 bis 9, **dadurch gekennzeichnet, dass** von dem Kabel ein endständiger Mantelabschnitt dadurch entfernt wird, dass der Aussenmantel (5) radial umlaufend durchtrennt wird und ein an die Durchtrennung angrenzender endständiger Mantelabschnitt entlang der Längsachse des Kabels bewegt wird.

11. Verfahren nach einem der Ansprüche 8 bis 10, **dadurch gekennzeichnet, dass** nur der Aussenmantel (5) bis angrenzend an den Innenmantel (4) umlaufend durchtrennt wird.

12. Verfahren nach einem der Ansprüche 8 bis 11, **dadurch gekennzeichnet, dass** an dem Abschnitt, in dem der Aussenmantel (5) mit dem Innenmantel (4) durch Bewegen entlang der Längsachse des Kabels entfernt ist, ein Anschlussstück angebracht wird.

## Claims

1. Cable comprising at least two wires (1), each of which is surrounded by an insulating conductor,
wherein the wires (1) are surrounded by a foamed inner sheath (4) comprising a first polymer mixture containing gas bubbles, whose polymer component is a thermoplastic elastomer
and an unfoamed outer sheath (5) made of a second polymer mixture surrounding the inner sheath (4),
wherein the second polymer mixture is free of gas bubbles and is a polymer component consisting of the same thermoplastic elastomer as that of the first polymer mixture,
wherein the thermoplastic elastomer is selected from the group consisting of thermoplastic polyurethane, thermoplastic polyester-polyether polymer, thermoplastic polystyrene elastomer, thermoplastic polyolefin elastomer, polystyrene-block copolymer and mixtures thereof.

2. Cable according to claim 1, **characterised in that** the first polymer mixture of the inner sheath (4) is foamed to a porosity of 5 to 70 vol.%.

3. Cable according to claim 1 or 2, **characterised in that** the polystyrene block copolymer comprises poly(styrene-ethylene-butylene-styrene) (SEBS), poly(styrene-butadienestyrene) (SBS), poly(styrene-isoprene-styrene) (SIS), poly(styrene-ethylene-propylene-styrene) (SEPS), poly(styrene-isobutylene-styrene) (SIS) and mixtures thereof.

4. Cable according to any one of the preceding claims, **characterised in that** the inner sheath (4) is laid directly on the wires (1).

5. Cable according to any one of the claims 1 to 3, **characterised in that** a film, a band and/or a metallic shield is arranged between the wires (1) and the inner sheath (4).

6. Cable according to one of the preceding claims, **characterised in that** the thermoplastic elastomer is a thermoplastic polyurethane (TPU).

7. Cable according to claim 6, **characterised in that** the thermoplastic polyurethane (TPU) is a thermoplastic polyether urethane (polyether-TPU) and/or a thermoplastic polyester urethane (polyester-TPU).

8. Method for producing a cable according to claims 1-7 by encapsulating at least two wires (1) with a first polymer mixture and then encapsulating the first polymer mixture with a second polymer mixture with subsequent curing of the first and second polymer mixtures, **characterised in that**
the polymer component of the first polymer mixture which forms the inner sheath is a thermoplastic elastomer and that the first polymer composition contains a foaming agent, while
the polymer component of the second polymer mixture which forms the outer sheath is the same thermoplastic elastomer as that of the first polymer mixture,
wherein the thermoplastic elastomer is selected from the group comprising thermoplastic polyurethane, thermoplastic polyester-polyether polymer, thermoplastic polystyrene elastomer, thermoplastic polyolefin elastomer, polystyrene-block copolymer and mixtures thereof.

9. Method according to claim 8, **characterised in that** the encapsulation is effected by means of an extruder which is heated, and that the first polymer mixture is heated to the decomposition temperature of the foaming agent.

10. Method according to any one of the claims 8 to 9, **characterised in that** a terminal sheath portion is removed from the cable, wherein the outer sheath (5) is severed radially circumferentially, and wherein the terminal sheath portion adjacent to the cut is moved along the longitudinal axis of the cable.

11. Method according to any one of the claims 8 to 10, **characterised in that** the outer sheath (5) is only severed circumferentially as far as the inner sheath (4).

12. Method according to any one of the claims 8 to 11, **characterised in that** a connector is attached at the portion in which the outer sheath (5) with the inner sheath (4) is removed by being moved along the longitudinal axis of the cable.

## Revendications

1. Câble comportant au moins deux conducteurs (1), dont chacun comprend une âme entourée d'une isolation, dans lequel les conducteurs (1) sont entourés d'une gaine interne expansée (4) en un premier mélange de polymères contenant des bulles de gaz, dont le composant polymère est constitué d'un élastomère thermoplastique, et d'une gaine externe non expansée (5) en un deuxième mélange de polymères, qui s'appuie sur la gaine interne (4), le deuxième mélange de polymères étant exempt d'inclusions gazeuses, et dont le composant polymère est constitué du même élastomère thermoplastique que celui du premier mélange de polymères, l'élastomère thermoplastique étant choisi dans le groupe consistant en un polyuréthanne thermoplastique, un polymère polyester-polyéther thermoplastique, un élastomère de polystyrène thermoplastique, un élastomère de polyoléfine thermoplastique, un copolymère à blocs de polystyrène, et les mélanges de ceux-ci.

2. Câble selon la revendication 1, **caractérisé en ce que** le premier mélange de polymères de la gaine interne (4) est expansé jusqu'à une proportion de pores de 5 à 70 % en volume.

3. Câble selon la revendication 1 ou 2, **caractérisé en ce que** le copolymère à blocs de polystyrène est l'un du poly(styrène-éthylène-butylène-styrène) (SEBS), du poly(styrène-butadiène-styrène) (SBS), du poly(styrène-isoprène-styrène) (SIS), du poly(styrène-éthylène-propylène-styrène) (SEPS), du poly(styrène-isobutylène-styrène) (SIS) et des mélanges de ceux-ci.

4. Câble selon l'une des revendications précédentes, **caractérisé en ce que** la gaine interne (4) s'appuie directement sur les conducteurs (1).

5. Câble selon l'une des revendications 1 à 3, **caractérisé en ce qu'**une feuille, un ruban et/ou un blindage métallique sont disposés entre les conducteurs (1) et la gaine interne (4).

6. Câble selon l'une des revendications précédentes, **caractérisé en ce que** l'élastomère thermoplastique est un polyuréthanne thermoplastique (TPU).

7. Câble selon la revendication 6, **caractérisé en ce que** le polyuréthanne thermoplastique (TPU) est un polyétheruréthanne thermoplastique (polyéther-TPU) et/ou un polyesteruréthanne thermoplastique (polyester-TPU).

8. Procédé de fabrication d'un câble selon l'une des revendications 1 à 7 par enrobage d'au moins deux conducteurs (1) avec un premier mélange de polymères et enrobage du premier mélange de polymères avec un deuxième mélange de polymères, puis durcissement du premier et du deuxième mélanges de polymères, **caractérisé en ce que** le constituant polymère du premier mélange de polymères, qui va former la gaine interne, est un élastomère thermoplastique, et que le premier mélange de polymères comprend un agent d'expansion ; le constituant polymère du deuxième mélange de polymères, qui va former la gaine externe, est le même élastomère thermoplastique que celui du premier mélange de polymères ; l'élastomère thermoplastique étant choisi dans le groupe consistant en un polyuréthanne thermoplastique, un polymère polyester-polyéther thermoplastique, un élastomère de polystyrène thermoplastique, un élastomère de polyoléfine thermoplastique, un copolymère à blocs de polystyrène et les mélanges de ceux-ci.

9. Procédé selon la revendication 8, **caractérisé en ce que** l'enrobage est réalisé à l'aide d'une extrudeuse, qui est porté à l'équilibre de température de telle sorte que le premier mélange de polymères soit porté à la température de décomposition de l'agent d'expansion.

10. Procédé selon l'une des revendications 8 à 9, **caractérisé en ce qu'**un segment terminal de la gaine est enlevé du câble par le fait que la gaine externe (5) subit un sectionnement radialement périphérique, et un segment de gaine terminal, contigu au sectionnement, se déplace le long de l'axe longitudinal du câble.

11. Procédé selon l'une des revendications 8 à 10, **caractérisé en ce que** seule la gaine externe (5) subit un sectionnement périphérique jusqu'à être contiguë à la gaine interne (4).

12. Procédé selon l'une des revendications 8 à 11, **caractérisé en ce qu'**une pièce de raccordement est rapportée au segment dans lequel la gaine externe (5), avec la gaine interne (4), est enlevée par déplacement le long de l'axe longitudinal du câble.
